# EUROPEAN PATENT APPLICATION

(11) **EP 4 789 803 A1**
(43) Date of publication of application: **12.08.2026**
(21) Application number: 26157664.9
(22) Date of filing: 10.02.2026
(51) Int. Cl.: B23K 9/12, B23K 9/167, B23K 9/29

(54) **WELDING TORCH AND WELDING SYSTEM**

(30) Priority: 10.02.2025 US 202519049128
(71) Applicant: Lincoln Global, Inc., Cleveland, OH 44117 (US)
(72) Inventor: ESPIRICUETA ULLOA, Miguel A., 27380 Torreón (MX); DRAGOLICH, Donald A., Huntsburg, 44046 (US); FLEMING, Daniel P., Painesville, 44077 (US)
(74) Representative: Hoyng Rokh Monegier B.V.

(57) **Abstract**

A welding torch includes a handle and an actuating device operable to control the supply of welding current and a welding wire supplied to a weld. The handle includes a body with a front portion and a rear portion. The actuating device is arranged on the front portion of the body. A head is formed onto a distal end of the body and is configured to accommodate a non-consumable electrode extending along a longitudinal axis of the welding torch. A wire guide assembly is attached to the head of the welding torch. The wire guide assembly may be selectively rotated about the longitudinal axis to an angular position.

## Description

### FIELD

The present disclosure generally relates to welding torches, and more specifically, a TIG welding torch including an actuating device located on a front portion thereof that is operable to control the supply of shielding gas, welding current, preheating wire current, and welding wire supplied to a weld.

### BACKGROUND

Tungsten inert gas (TIG) welding is a welding process that requires a high level of skill and dexterity. TIG welding is traditionally performed on welds requiring high precision. A conventional TIG welding application requires a torch with a non-consumable electrode (e.g., tungsten) that emits a welding arc to establish a molten weld pool, and a filler metal that is fed into the weld pool, either manually (e.g., by hand) or semi-automatically (e.g., via a wire feeder). Some TIG welding torches have an actuating device (e.g., a switch or button) operable to initiate the supply of welding wire into the weld pool, and another actuating device operable to establish the welding arc. However, operating such torches is cumbersome for the user based on the location of the actuating devices on the torch handle. In particular, many actuating devices are located on a rear portion or side of the handle, making it uncomfortable for the user to operate the actuating devices (e.g., with a thumb) while gripping and maneuvering the torch (e.g., by wrapping fingers around a front portion or side of the handle).

Moreover, those TIG welding torches that are equipped to feed welding wire into the weld pool generally include a wire feed device comprising an arched (and exposed) wire feed conduit thereon, making the welding torch bulky and difficult to maneuver (e.g., in tight corners or spaces) and/or causing wire feed issues based on the high degree of curvature the welding wire must traverse through the wire feed conduit. In addition, because the wire feed conduits are exposed, they are more susceptible to being damaged by external elements in the environment (e.g., thermal exposure to heat, physical contact with a heated workpiece, etc.). Further, TIG welding applications generally utilize a cold filler metal or wire (e.g., at an ambient temperature) as a filler material for creating a weld. However, utilizing cold filler metal/wire limits the deposition rate (and speed) of the TIG welding process. It is desirable to perform TIG welding with a torch that can access numerous welding configurations, is easier and more comfortable to operate, is more robust, and can perform welding at a higher deposition rate without encountering wire feed issues during the welding process.

### SUMMARY

The following summary presents a simplified summary in order to provide a basic understanding of some aspects of the devices and/or systems discussed herein. This summary is not an extensive overview of the devices and/or systems discussed herein. It is not intended to identify critical elements or to delineate the scope of such devices and/or systems. Its sole purpose is to present some concepts in a simplified form as a prelude to the more detailed description that is presented later.

In accordance with one aspect, there is provided a welding torch including a handle. The handle includes a body with a front portion and a rear portion. An actuating device is disposed on the front portion of the handle and is operable to control the supply of at least one of a shielding gas, a welding wire, a welding current, and a preheating current through the torch. A head is disposed on a distal end of the body and is configured to at least partially accommodate a consumable assembly therein. The consumable assembly includes a non-consumable electrode for emitting the welding current to a weld. The non-consumable electrode extends along a longitudinal axis of the torch. A wire guide assembly is attached to the head and includes a tube configured to supply the welding wire to the weld. The tube may be selectively rotated to an angular position about the longitudinal axis.

In an embodiment, the wire guide assembly includes a mount attached to the head. The mount is configured to be selectively rotated about the longitudinal axis to the angular position.

In an embodiment, a rear portion of the electrode is enclosed by the head and the consumable assembly.

In an embodiment, the body of the handle defines a cavity therein, and a conduit lead extends through the cavity to supply the welding wire from an external wire supply.

In an embodiment, the tube includes a proximal portion and a bent portion. The bent portion defines an acute angle relative to the longitudinal axis and is configured to direct the welding wire to the weld.

In an embodiment, the mount includes an upper portion. An upper surface of the tube or the conduit is recessed relative to an upper surface of the upper portion.

In an embodiment, the wire guide assembly includes a tuning element configured to fine tune the angular position.

In an embodiment, the actuating device is operable to simultaneously initiate the supply of at least two of the shielding gas, the welding current, and the welding wire via the torch.

In an embodiment, a cover is removably attached to the welding torch and is configured to enclose the conduit.

In an embodiment, the consumable assembly includes a contact tip attached to the tube. The tube is configured to conduct current to the contact tip to preheat the welding wire supplied via the wire conduit.

In accordance with another aspect, there is provided a TIG welding system. The TIG welding system includes a first power source and a welding torch. The first power source is configured to supply current to the welding torch. The welding torch includes a handle including a front portion and a rear portion. An actuating device is disposed on the front portion and is operable to control the supply of at least one of a shielding gas, a welding wire, and the current through the torch. A head is disposed on a distal end of the handle and is configured to at least partially accommodate a non-consumable electrode extending along a longitudinal axis of the torch. A wire guide assembly is attached to the head of the welding torch and includes a tube configured to supply the welding wire to a weld via a contact tip. The first power source is configured to supply the current to the contact tip via the tube to preheat the welding wire before it is deposited to the weld.

In an embodiment, the tube may be selectively rotated to an angular position about the longitudinal axis.

In an embodiment, the welding torch includes a tuning element configured to fine tune the angular position.

In an embodiment, the welding system also includes a second power source configured to supply a welding current to the non-consumable electrode to generate a welding arc.

In an embodiment, the first power source is configured to supply a welding current to the non-consumable electrode to generate a welding arc.

In accordance with yet another aspect, there is provided a torch including a handle defining a cavity therein. The handle also includes a front portion facing a forward longitudinal direction, and a rear portion facing an opposite direction of the forward longitudinal direction. An actuating device is arranged on the front portion and is operable to control the supply of a welding current or a welding wire. A head is formed on an end of the handle and includes a non-consumable electrode extending along a longitudinal axis of the torch in the forward longitudinal direction. The electrode is configured to emit the welding current to a weld. A wire conduit extends through the cavity of the handle and is configured to supply the welding wire to the weld from an external wire supply. A tube is secured to the head of the torch for conveying the welding wire from the wire conduit to the weld. The tube may be selectively rotated to an angular position about the longitudinal axis.

In an embodiment, a contact tip is attached to the tube and is configured to preheat the welding wire before the welding wire is deposited to the weld.

In an embodiment, the tube includes a conductive material and is connected to a power cable disposed in the conduit. The tube is configured to conduct current from the power cable to the contact tip via the conductive material to preheat the welding wire.

In an embodiment, the actuating device is operable to initiate the supply of at least one of the shielding gas, the welding current, and a preheating current, wherein the preheating current preheats the welding wire before the welding wire is deposited into the weld.

In an embodiment, the actuating device is selected from the group consisting of a multi-level button, a multi-level trigger, a spring-loaded button, a spring-loaded trigger, a pressure sensitive button, a pressure sensitive trigger, a switch, a touch sensor, a slider, an encoder, or a tactile switch.

Numerous aspects of the general inventive concepts will become readily apparent from the following detailed description of exemplary embodiments, from the claims, and from the accompanying drawings.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a perspective view of an example TIG welding system;
FIG. 2 is a perspective view of an example welding torch of the present disclosure;
FIG. 3 is a side view of the welding torch of FIG. 2;
FIG. 4 is a cross-sectional view of the welding torch of FIG. 2 taken along line 4-4 in FIG. 2;
FIG. 5 is a schematic representation of an example welding system according to the present disclosure;
FIG. 6 is a front view of the example welding torch of the present disclosure; and
FIG. 7 is a perspective view of another example welding torch according to the present disclosure.

### DETAILED DESCRIPTION

The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B.". In this application, features, clauses and claims are disclosed either in combination or in isolation. However, this application encompasses any combination of a feature disclosed in combination with any other feature disclosed herein.

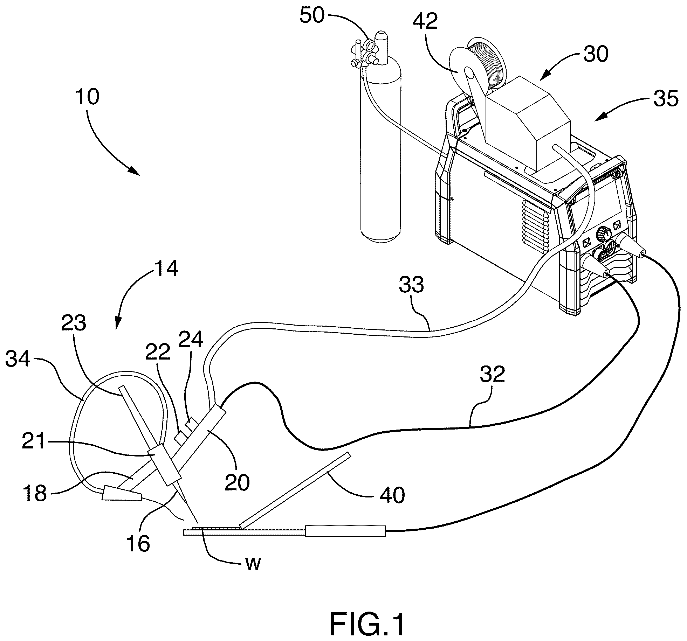

Referring to FIG. 1, an example of a conventional TIG welding system 10 is shown. The TIG welding system 10, in general, includes a power source 35 configured to generate and regulate welding current and voltage supplied to a TIG welding torch 14 via a power cable assembly 32 connected thereto. The TIG welding torch 14 includes a non-consumable electrode 16 (e.g., an alloyed tungsten electrode) configured to direct the welding current to a weld pool W (i.e., molten metal that forms at the site of a weld). In the embodiment shown, the electrode 16 is partially accommodated in a head 21 of the torch and in a back cap 23 protruding rearwardly from the head 21 of the torch 14. A shielding gas supply 50 may be fluidly connected to the TIG welding torch 14 (e.g., via the power cable assembly 32) to supply shielding gas (e.g., Argon) around the weld pool W to protect the weld pool W from contaminants in the surrounding environment (e.g., oxygen, moisture, etc.). A welding wire or rod 40 may be manually fed to the weld pool W (e.g., by hand) to add filler material to the resulting weld (e.g., to fill a gap between parts or workpieces being joined). Alternatively, the welding system 10 may include a wire feeder 30 operable to convey welding wire 42 (e.g., supplied from a spool of wire) to the weld pool W via a cable assembly 33 extending between the TIG welding torch 14 and the wire feeder 30. The TIG welding torch 14 may include a bracket or mount 18 configured to support an exposed wire conduit 34 (connected to the cable assembly 33) for supplying the welding wire 42 to the weld pool W.

The TIG welding torch 14 may include a handle 20 with first and second actuating devices 22 and 24 (e.g., buttons or triggers disposed on a rear surface thereof). The first actuating device 22 may be operatively connected to the power source 12 and operable to control the supply of welding current and/or shielding gas, and the second actuating device 24 may be operatively connected to the wire feeder 30 and operable to initiate and control the supply of welding wire 42 (supplied via the wire feeder 30) to the weld pool W.

In the embodiment shown, the TIG welding torch 14 may be maneuvered about the weld pool W by gripping the handle 20 of the TIG welding torch 14 (by wrapping fingers around the handle 20), and the torch 14 may be operated by using a thumb or other finger to depress the first and second actuating devices 22 and 24. Operating the TIG welding torch 14 shown in the illustrated example may be cumbersome for the user insofar as the user must maneuver the welding torch 14 with their fingers wrapped around the torch handle 20 while separately utilizing their thumb or one of their fingers to control the first and second actuating devices 22 and 24. Moreover, the arched conduit 34 extending from the cable assembly 32 may hinder one's ability to maneuver the torch 14 about various weld joints (e.g., when welding in tight spaces) and/or make the TIG welding torch 14 more vulnerable to being damaged (e.g., by thermal exposure or physical damage, as noted above herein). In addition, the high degree of curvature the wire must traverse through the conduit 34 may hinder the wire from passing therethrough, causing wire feeding issues and downtime.

Embodiments of the present invention relate to a welding torch that is ergonomic, maneuverable, robust, and capable of being utilized for a variety of welding applications, for example, TIG welding applications requiring heat control for welding thin or temperature-sensitive materials, or TIG welding applications requiring an increased deposition rate (e.g., an increased welding speed), as discussed in detail below. While the illustrated embodiments refer to a welding torch for TIG welding applications, it should be appreciated that the present teachings may also be applied to welding torches for other welding applications, including, but not limited to, handheld laser welding or plasma welding applications.

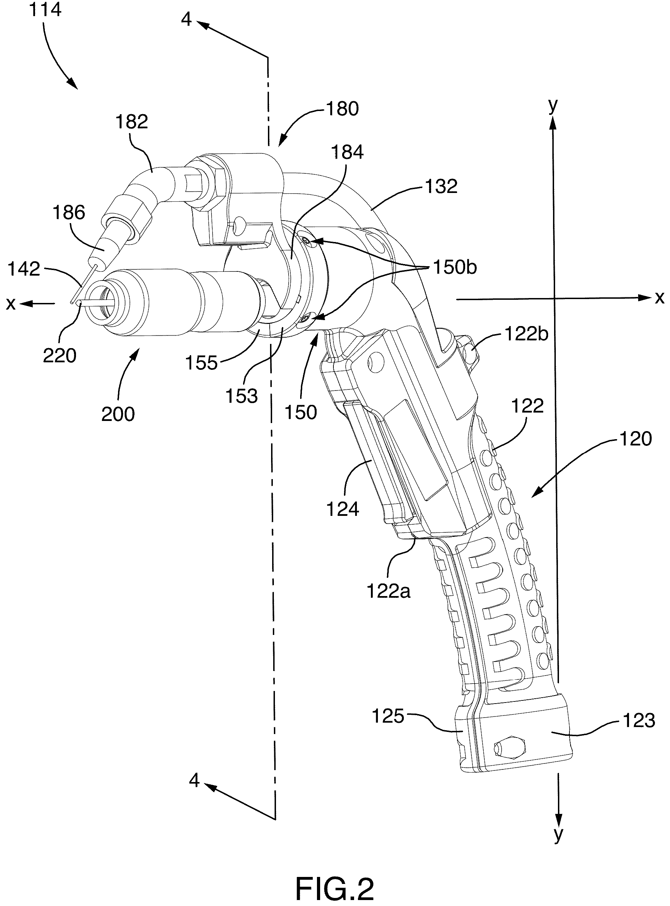

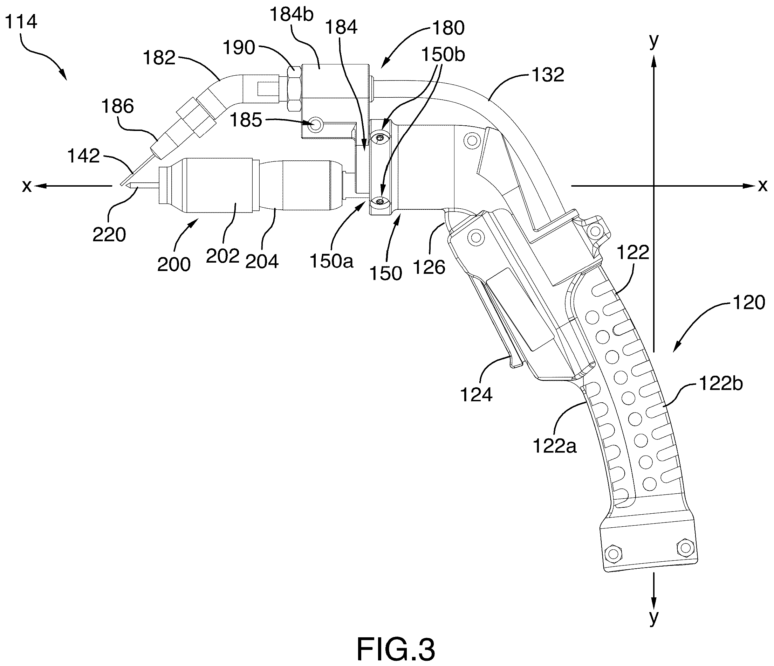

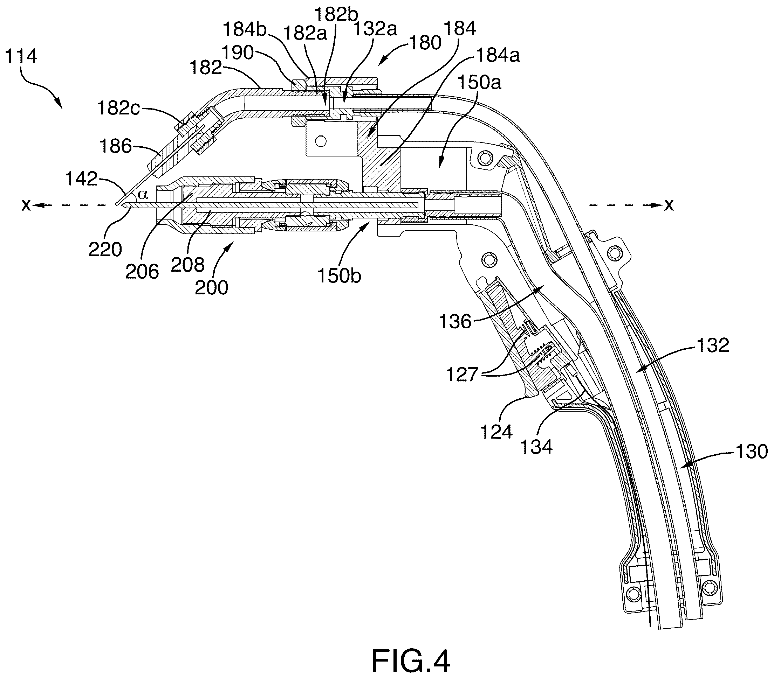

Referring to FIGS. 2-4, a welding torch 114 according to an embodiment of the present invention is shown. A welding system 100 employing the welding torch 114 is shown in FIG. 4. As shown in FIGS. 2 and 3, the welding torch 114, in general, includes a handle 120, a head 150, a wire guide assembly 180, and a consumable assembly 200 comprising a non-consumable electrode 220.

The handle 120 includes a body 122 comprising a first or front portion 122a and a second or rear portion 122b. The front portion 122a faces a forward longitudinal direction, and the rear portion 122b faces a rearward longitudinal direction. For the purposes of this disclosure, the forward longitudinal direction is a direction extending from the front portion 122a of the body 122 toward a distal end of the electrode 220 along the longitudinal axis x (extending to the left in the embodiment of FIG. 3), and the rearward longitudinal direction is a direction that faces an opposite direction of the forward longitudinal direction (extending to the right in the embodiment of FIG. 3). In some embodiments, the body 122 may be made from a suitable rigid material, for example, a molded plastic material suitable for exposure to high temperatures, e.g., PTFE, polyamide, acrylic, or any other suitable high-temperature plastic material.

In some embodiments, the body 122 of the handle 120 may be formed with a textured surface (e.g., raised protrusions and grooves as shown, or ribs, ridges, cross-hatching or a diamond pattern, etc.) to improve grip, reduce slippage, and enhance the ergonomic feel of the handle 120. It is contemplated that a soft-rubberized material (e.g., TPE) may be combined with plastic during the injection molding process in areas that require high friction and comfort (e.g., when being gripped by a user's hand). It is also contemplated that anti-slip coatings or over-molded grips may be utilized for this purpose. In the embodiment shown, the body 122 comprises two halves (see, e.g., 123, 125 in FIG. 2) that are plastic-injection molded to fit together, whereupon the halves may be secured via fasteners (e.g., screws, bolts, clips, etc.). It is contemplated that the body 122 may take on other forms, such as two halves connected via a living hinge (e.g., to define a clamshell-like body), or a body comprising a single-plastic injection molded component.

An actuating device 124 may be disposed on the front portion 122a of the handle body 122. The actuating device 124 may be operable to control the supply of welding current, shielding gas, welding wire (from an external wire supply source (e.g., 42 in FIG. 1)), and the supply of a preheating current (to preheat the welding wire to perform hot wire welding, as discussed below). In the embodiment shown, the actuating device 124 comprises a trigger that is naturally biased outwardly (e.g., via a biasing element, such as one or more springs 127 (see FIG. 4)) to resist the user's action to depress the trigger. It is contemplated that the actuating device 124 may take on other forms, for example, a button, a touch sensor (e.g., a capacitive touch button using capacitive sensors), a switch, a slider, a rotary encoder, a tactile control element (e.g., a tactile switch), and the like.

In some embodiments, the actuating device 124 may embody a spring-loaded, multi-level button or trigger that may be depressed to a first level to initiate the supply of at least one of a shielding gas and welding current, and further depressed to a second level to initiate the supply of at least one of a welding wire and preheating current (e.g., to resistively preheat the welding wire). It is contemplated that a wide variety of multi-level buttons or triggers may be utilized for this purpose, for example, a spring-loaded trigger that registers or clicks at multiple depression points, a trigger or button with a force-sensitive resistor, a pressure-sensitive button or trigger, a rotatable wheel or slider that registers or clicks at multiple points, wherein each point or depression point corresponds to the control of a respective function, for example, the control of shielding gas supply, welding wire, welding current (e.g., arc initiation), and a preheat current (to resistively preheat the wire), or any suitable combination thereof.

In some embodiments, the actuating device 124 may be operable to control (e.g., initiate and terminate) a welding sequence. For instance, the welding sequence may include a first time period that elapses after time zero, wherein time zero corresponds to initiating the welding sequence (e.g., by depressing the actuating device 124). In this embodiment, initially depressing the actuating device 124 (e.g., at time zero) may send a command signal (e.g., to the welding power source) to initiate the supply of shielding gas. After the first time period has elapsed (e.g., with the actuating device 124 continually depressed from time zero to the end of the first time period), the actuating device 124 may send a command signal to initiate the supply of at least one of welding current, a welding wire, and optionally a preheating current to preheat the wire. In some embodiments, the first time period may elapse somewhere between about .05 to 3 seconds. The welding sequence may also include additional time periods elapsing after the first time period, for instance, a second time period that, when elapsed, initiates the supply of at least one of a welding wire and optionally a preheating current to preheat the welding wire. It is also contemplated that the actuating device 124 may be successively depressed to initiate various functions throughout a welding sequence. For example, initially depressing the actuating device 124 may initiate the welding sequence (e.g., and the supply of shielding gas), and depressing the actuating device 124 a second time may initiate the supply of at least one of a welding arc, welding wire, and a preheating current. It is also contemplated that the actuating device 124 may be configured such that depressing the actuating device 124 a third time may initiate the supply of at least one of a welding wire, a preheating current, and/or an arc termination sequence, e.g., to terminate the welding arc and initiate the supply of a post flow shielding gas. In this manner, it should be understood that a wide variety of actuating device control configurations may fall within the scope of the present disclosure.

Referring to FIG. 4, the body 122 defines a cavity 130 therein dimensioned to receive one or more actuating device leads 134, a power cable/gas line lead 136, and a wire conduit lead 132 therethrough. In some embodiments, lead 132 may comprise a power cable and a wire conduit (i.e., a power cable/wire conduit lead), wherein the power cable is configured to supply current to a contact tip 186 to resistively preheat the weld wire to facilitate hot wire welding. In the example shown, the power cable/gas line lead 136 and the power cable/wire conduit 132 lead (and their respective connections to the consumable assembly 200 and the wire guide assembly 180) are isolated relative to each other and insulated via protective shrouds, for example, via a rubber or thermoplastic elastomer material providing resistance to heat and abrasion, while insulating the power cable leads therein.

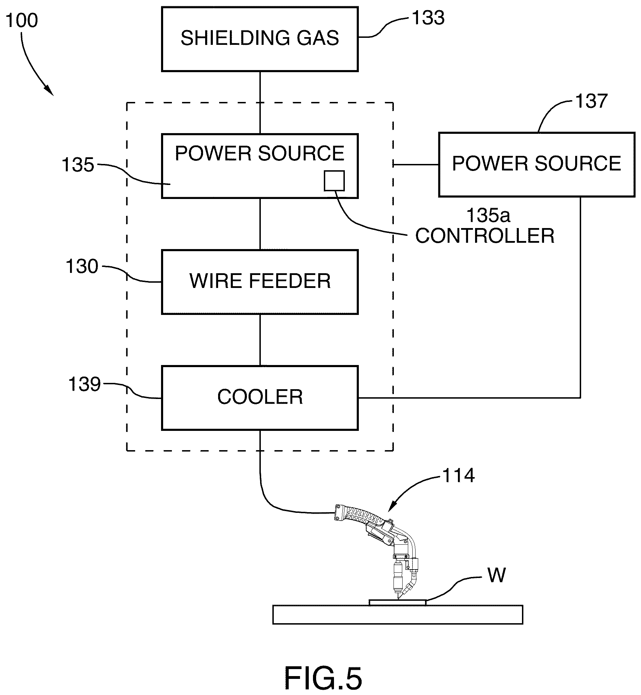

In some embodiments, the cavity 130 may also receive coolant lines (e.g., for circulating coolant through the torch 114 supplied from a cooler 139 (FIG. 5)) to facilitate high amperage TIG welding applications. The actuating device lead 124 may be operatively connected to a welding power source 135 (FIG. 5) and a wire feeder 130, and configured to send commands thereto, for example, to control the supply of shielding gas from a shielding gas supply 133 (FIG. 5) through the power cable/gas line lead 136, the supply of current from the power source 135 (FIG. 5) to the non-consumable electrode 220 via power cable/gas line lead 136, the supply of welding wire from the wire feeder 130 (FIG. 5) through the power cable/wire conduit lead 132, and optionally the supply of a preheating current from another power source 137 (FIG. 5) through the power cable/wire conduit lead 132 (to preheat the welding wire before it is deposited into a weld pool).

The actuating device lead(s) 134 may transmit the signal(s) when the actuating device 124 is operated (e.g., moved or depressed) to activate one or more switches or sensors for this purpose (to open or close a circuit). As noted above, the actuating device 124 may be configured to communicate multiple signals to the power supply 135 and wire feeder 130, for example, to control the supply of at least one of a welding current, shielding gas, welding wire, and/or a preheating current.

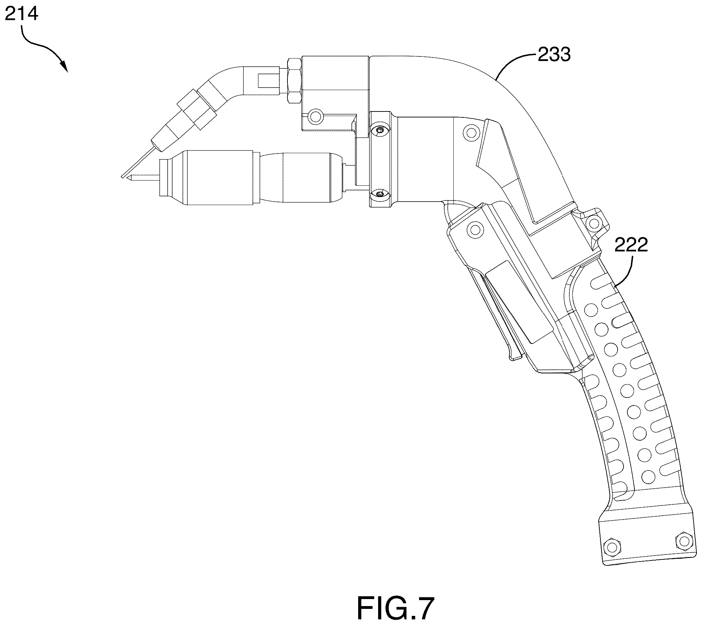

Referring to FIG. 3, as noted above, the power cable/wire conduit lead 132 and the power cable/gas line lead 136 may each comprise a protective shroud to protect the power cable/wire conduit lead 132 from the surrounding environment. In other embodiments (see, e.g., FIG. 7), a protective cover 233 may be attached to the torch 214 to enclose and further protect the wire/power cable conduit 132 from the external environment. In some embodiments, the protective cover 233 may be integrally formed with the torch body 222 (e.g., via plastic-injection molding) or attached to the torch body 222 as a separate component. In some embodiments, the protective cover 233 may comprise mating features (e.g., resilient snaps, mating protrusions/groves, mating openings for fasteners) to removably attach the protective cover 233 to the body 222. In some embodiments, the protective cover 233 may comprise a rigid material (e.g., metal, or rigid plastic (e.g., polycarbonate, nylon, acrylic, and the like)) to protect and fully enclose the wire/power cable lead 132 from the external environment.

In some embodiments, the power cable/gas line lead 136 and the power cable/wire conduit lead 132 may be disposed in a cable cover (e.g., a wrap) extending between the welding torch 114 and the power source 135 (FIG. 5, and optionally 137) and the wire feeder 130 (FIG. 5).

Referring to FIGS. 2 and 3, the head 150 of the torch 114 may extend from a distal end 126 of the body 122 and be integrally formed therewith. In some embodiments, the head 150 may comprise two halves 153 and 155 (FIG. 2) that are integrally formed with halves (e.g., 123 and 125) of the body 122, respectively.

As shown in FIG. 4, the head 150 may define a cavity 150a therein configured to at least partially accommodate the consumable assembly 200 therein. The consumable assembly 200 may comprise the non-consumable electrode 220 (e.g., a tungsten-based electrode) extending along the longitudinal axis x (FIG. 2) of the torch 114. The non-consumable electrode 220 may be configured to emit/direct a welding current to a weld pool W (FIG. 5).

Referring to FIGS. 3 and 4, the consumable assembly 200 may also comprise industry standard TIG torch consumables, such as an alumina nozzle 202, a heat shield 204, a collet body or gas lens/diffuser 206, a collet 208, and the like. In some embodiments, the alumina nozzle 200 may rotatably engage the gas/lens diffuser (or collet body) to secure the non-consumable electrode 220 in place, e.g., via threaded connections therebetween, wherein tightening the alumina nozzle will cause the gas lens/diffuser (or collet body) to grip the non-consumable electrode 220 (e.g., via compressive radial forces exerted on the collet). Because the consumables of the consumable assembly 200 are known in the art (and perform according to their typical functions), a detailed description thereof has been omitted for brevity.

As shown in FIG. 4, the welding torch 114 is devoid of a rearwardly protruding electrode back cap (e.g., 23 in FIG. 1), such that a rear portion of the electrode 220 is entirely enclosed by the head 150 and the consumable assembly 220 (such that there is no back cap protruding rearwardly relative to the handle body 222). This aspect of the present disclosure is particularly beneficial for making the welding torch 114 more maneuverable in tight welding configurations (e.g., wherein the presence of a back cap would otherwise preclude the welding torch from accessing a weld).

Referring to FIGS. 3 and 4, the wire guide assembly 180 may be configured to attach to the head 150 via a rotatable mount 184. In general, the wire guide assembly 180 may include the mount 184, a tube 182, a contact tip 186, and a tuning element 190, as discussed in detail below.

In the embodiment shown, the wire guide assembly 180 is secured to the head 150 of the torch 114 by extending one or more fasteners (e.g., set screws) through one or more corresponding openings 150b (FIG. 3) of the head 150 (extending radially therethrough and equally spaced about a circumference thereof), and tightening the fasteners such that they firmly engage a lower portion 184a of the mount 184, which is at least partially received by the cavity 150a of the head 150. It is contemplated that the mount 184 may be secured to the head via other forms of fasteners, for example, via a ratchet mechanism (comprising a pawl configured to engage grooves), magnets, a locking collar, one or more spring-loaded pins, a friction ring, resilient clips or snaps, and the like.

The mount 184 may comprise an upper portion 184b that at least partially surrounds the juncture of the power cable/wire conduit lead 132 and the tube 182. Openings 185 (FIG. 3) may extend through opposing sides of the upper portion 184b. The openings 185 may be dimensioned to receive fasteners (e.g., a bolt and a nut) to secure or tighten the upper portion 184b about the power cable/wire conduit lead 132 and the tube 182 (e.g., to secure the connection therebetween). In an embodiment, the mount 184 embodies a clamp defining a mating internal contour dimensioned to mate with an external contour of a fastener (e.g., a hex fitting) configured to secure the connection between the power cable/wire conduit lead 132 and the tube 182.

Further, the mount 184 may protect the power cable/wire conduit lead 132 and the tube 182 from physically contacting elements (e.g., objects) in the external environment. In particular, upper surfaces of the power cable/wire conduit lead 132 and the tube 182 may be recessed relative to an upper surface of the mount 184 (as measured along a vertical axis y (FIG. 3)) to further protect the tube 182 and the power cable/wire conduit lead 132 from physical contact with elements in the surrounding environment, e.g., located above an upper surface of the upper portion 184b of the mount 184. It is contemplated that the upper portion 184b of the mount 184 may be made longer (e.g., as measured along the longitudinal axis x) than that which is shown, for example, to further enclose and protect the power cable/wire conduit lead 132 and the tube 182 from physical damage with objects in the surrounding environment.

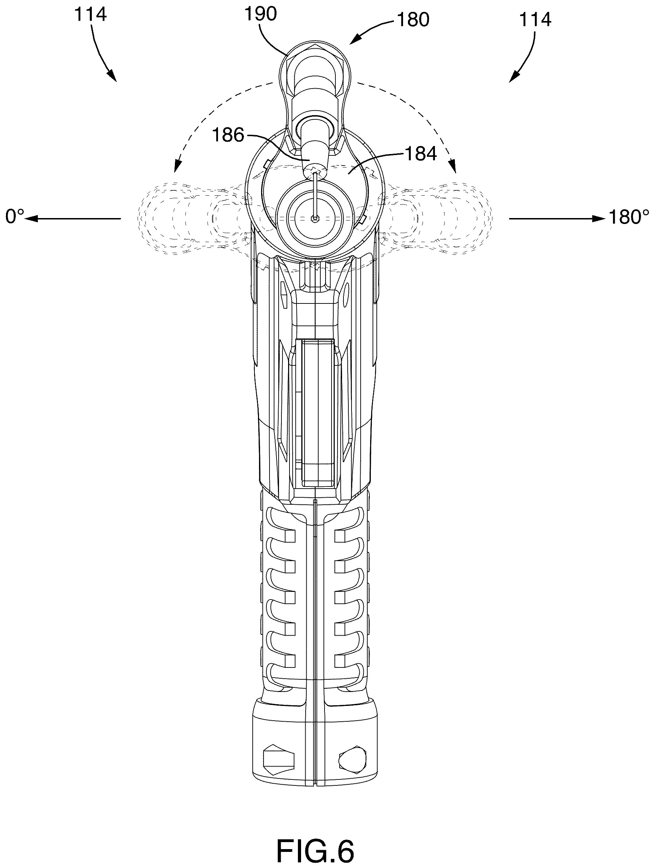

As shown in FIG. 6, an angular position of the mount 184 (and therefore the tube 182, the contact tip 186, and welding wire 142 supplied therefrom) may be selectively rotated about the longitudinal axis x (FIG. 3) of the welding torch 114. In this manner, a user may adjust the angular position of the wire guide assembly 180 relative to the head 150, for example, in order to access a specific welding configuration or welding joint access requirement due to space constraints. In particular, the one or more fasteners 185 (FIG. 2) extending into the one or more corresponding openings 150b (FIG. 2) of the head 150) may embody a first tuning element that, when removed or untightened, allows the user to selectively rotate the wire guide assembly 180 about the longitudinal axis x to a desired angular position (e.g., between about 0 and 180 degrees). In this manner, the first tuning element (the one or more fasteners in the embodiment shown) may be tightened to fix the angular position, e.g., such that the wire guide assembly 180 is constrained from further rotation relative to the head 150. It is contemplated that other examples of first tuning elements may be utilized to enable the wire guide assembly 180 to be selectively rotated to a desired angular position. For example, one of the head 150 and the mount 184 may define a series of notches (e.g., extending into mating, circumferential surfaces thereof) configured to engage a pawl (e.g., spring loaded) formed on the other of the head 150 and the mount 184 to enable the mount 184 (and thus the wire guide assembly 180) to be selectively rotated to the desired angular position (e.g., a position corresponding with a click between the pawl and groove). In other embodiments, the first tuning element may embody a magnet, a locking collar, a spring-loaded pin, or a friction ring, etc.

Referring to FIG. 4, the tube 182 includes a proximal portion 182a defining an opening 182b that opens to a distal opening 132a of the wire conduit 132. The tube 182 may embody a conductor tube that comprises an insulated, conductive material (e.g., brass, copper, etc.) for conducting current from a power cable (e.g., connected to power source 137 in FIG. 5) to the contact tip 186 attached thereto. In such embodiments, the conductive material of the tube 182 may be insulated via any suitable form of an insulating material, for example, rubber, PVC, or polyurethane, and the like.

In the embodiment shown, the tube 182 comprises the proximal portion 182a (extending in a direction parallel to the longitudinal axis x) and a bent portion 182c (extending toward a distal end of the electrode 220). The bent portion 182c may define an acute angle ∞ relative to the longitudinal axis x. In some embodiments, the acute angle ∞ may be between about 10 and 60 degrees, between about 20 and 50 degrees, or between about 30 and 40 degrees. In this manner, the bent portion 182c may be configured to direct welding wire supplied via the power cable/weld conduit lead 132 to a weld being performed.

In some embodiments, the tube 182 may comprise a rigid, insulated outer wall (comprising insulated copper, brass, or another conductive material) and a wire conduit extending therethrough for supplying welding wire to the contact tip 186. In some embodiments, a liner may extend through the tube 182 and the power cable/wire conduit lead 132 for supplying the welding wire to the contact tip 186. The liner may comprise a low-friction material (e.g., Teflon or other pTFE based material) to enhance the feedability of the wire, e.g., to prevent jamming or wire feed issues. In this manner, the tube 182 may be configured to guide welding wire 142 (supplied from the power cable/wire conduit lead 132) through the contact tip 186 and to a weld pool W (FIG. 5), e.g., wherein the welding wire 142 is supplied from an external wire supply, e.g., wire feeder 130 in FIG. 5. In some embodiments, the power cable/wire conduit lead 132 may be operatively connected to a separate power source 137 (FIG. 5). The power source 137 may be configured to supply current to the contact tip 186 to resistively preheat the welding wire 142 as it is conveyed therethrough (e.g., to facilitate a hot wire welding process). In some embodiments, the power source 137 may be a separate power source (e.g., an AC or DC power supply), or may form part of a single power source, for example, a welding power source 135 (FIG. 5) comprising a controller 135a (e.g., comprising a processor and a storage device) configured to regulate and manage the output of power and shielding gas supplied during the welding process, for example, to control the voltage and welding current delivered to the welding arc, to control a solenoid valve for commencing and terminating shielding gas flow. In some embodiments, the controller 135a may also comprise logic to control the wire feed speed. In some embodiments, the wire feeder 130 may comprise a controller for this purpose.

In the illustrated example, the welding torch 114 may be configured to preheat the welding wire (e.g., to a temperature below its melting point) via the contact tip 186 when it is desirable to weld at an increased deposition rate, thereby increasing the speed of the TIG welding process. In other embodiments, the tube 182 may be configured to supply the wire 142 to the weld pool W at an ambient temperature (without preheating), for example, for applications requiring increased heat control (e.g., when welding on thin materials, materials vulnerable to distortion, or delicate parts).

As shown in FIGS. 3 and 6, the wire guide assembly 180 may include a second tuning element 190 configured to fine tune the angular position of the tube 182 (and thus the contact tip 186 and welding wire 142 supplied therefrom). For the purposes of this disclosure, fine tuning the angular position means adjusting the angular position (adjusted via the first tuning element) between about 0 and 25 degrees, between about 0 and 10 degrees, or between 0 and 5 degrees. In some embodiments, the second tuning element may embody a nut (e.g., a jam nut) that may be selectively untightened to fine tune the angular position, and then retightened to secure the angular position. Although it is contemplated that other forms of second tuning elements may be used for this purpose, for example, magnets, a locking collar, one or more spring-loaded pins, a friction ring, resilient snaps or clips, and the like.

In some embodiments, the welding torch 114 may be configured to manipulate the welding wire 142 in a controlled back and forth motion to agitate the weld pool W, to control heat input and reduce the risk of porosity. In particular, the wire feeder 130 may comprise a wire feed drive that mechanically reciprocates the welding wire 142 to and from the weld pool W at a predetermined frequency. In some applications, the wire motion (back and forth motion) may be synchronized with a waveform to produce a weld with minimal spatter, for example, employing a surface tension transfer waveform or other suitable waveform control technology. In some embodiments, the torch 114 may be configured to supply more than one welding wire to the weld pool W. For example, the torch 114 may comprise a contact tip and wire conduit configured to supply two welding wires to the weld pool, e.g., to facilitate a dual wire welding method, for example, as disclosed in U.S. Patent No. 10,792,752 which is incorporated by reference herein for all that it contains. In some embodiments, the torch 114 may comprise a cable lead (including at least one or all of the power cable(s), the wire feed conduit, coolant lines, a shielding gas line). It is contemplated that an industry standard adapter may be disposed at an end of the cable lead, e.g.., an industry standard twist-mate or dinse adapter, etc. In this manner, it should be understood that the welding torch 114 may be agnostic to the type of welding machine utilized for the TIG welding process.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the scope of the general inventive concepts, as defined by the appended claims, and equivalents thereof.

## Claims

1. A welding torch comprising:
a handle including a body, wherein the body includes a front portion and a rear portion;
an actuating device disposed on the front portion of the handle, wherein the actuating device is operable to control the supply of at least one of a shielding gas, a welding wire, a welding current, and a preheating current through the torch;
a head disposed on a distal end of the body and configured to at least partially accommodate a consumable assembly therein, wherein the consumable assembly includes a non-consumable electrode for emitting the welding current to a weld, wherein the electrode extends along a longitudinal axis of the torch; and
a wire guide assembly attached to the head, wherein the wire guide assembly includes a tube configured to supply the welding wire to the weld, wherein the tube may be selectively rotated to an angular position about the longitudinal axis.

2. The welding torch of claim 1, wherein the wire guide assembly includes a mount attached to the head, wherein the mount is configured to be selectively rotated about the longitudinal axis to the angular position, wherein preferably the wire guide assembly includes a tuning element configured to fine tune the angular position.

3. The welding torch of claim 1 or 2, wherein a rear portion of the electrode is enclosed by the head and the consumable assembly.

4. The welding torch of any of the previous claims, wherein the body of the handle defines a cavity therein, and wherein a conduit lead extends through the cavity to supply the welding wire from an external wire supply.

5. The welding torch of any of the previous claims, wherein the tube comprises a proximal portion and a bent portion, wherein the bent portion defines an acute angle relative to the longitudinal axis and is configured to direct the welding wire to the weld.

6. The welding torch of any of the previous claims, wherein the mount comprises an upper portion, wherein an upper surface of the tube or the conduit is recessed relative to an upper surface of the upper portion.

7. The welding torch of any of the previous claims, wherein
- the actuating device is operable to simultaneously initiate the supply of at least two of the shielding gas, the welding current, and the welding wire via the torch;
and/or
- a cover is removably attached to the welding torch and is configured to enclose the conduit;
and/or
- the consumable assembly includes a contact tip attached to the tube, wherein the tube is configured to conduct current to the contact tip to preheat the welding wire supplied via the wire conduit.

8. A TIG welding system comprises:
a power source configured to supply current; and
a welding torch including:
a handle including a front portion and a rear portion;
an actuating device disposed on the front portion of the handle, wherein the actuating device is operable to control the supply of at least one of a shielding gas, a welding wire, and a current through the torch;
a head disposed on a distal end of the handle and configured to at least partially accommodate a non-consumable electrode, wherein the electrode extends along a longitudinal axis of the torch; and
a wire guide assembly attached to the head, wherein the wire guide assembly includes a tube and a contact tip, wherein the tube is configured to supply the welding wire to a weld via the contact tip, wherein the power source is configured to supply the current to the contact tip via the tube to preheat the welding wire before it is deposited to the weld.

9. The TIG welding system of claim 8, wherein the tube may be selectively rotated to an angular position about the longitudinal axis, wherein preferably the welding torch includes a tuning element configured to fine tune the angular position.

10. The TIG welding system of claim 8 or 9, wherein the welding system further comprises a second power source configured to supply welding current to the non-consumable electrode to generate a welding arc.

11. The TIG welding system of claim 8 or 9 or 10, wherein the power source is configured to supply welding current to the non-consumable electrode to generate a welding arc.

12. A torch comprises:
a handle defining a cavity therein, wherein the handle comprises a front portion facing a forward longitudinal direction, and a rear portion facing an opposite direction of the forward longitudinal direction;
an actuating device arranged on the front portion and operable to control at least one of the supply of a welding current or a welding wire;
a head formed on an end of the handle, wherein the head includes a non-consumable electrode extending along a longitudinal axis of the torch in the forward longitudinal direction, wherein the electrode is configured to emit the welding current to a weld; and
a conduit extending through the cavity and configured to supply the welding wire to the weld from an external wire supply; and
a tube secured to the head for conveying the welding wire from the conduit to the weld, wherein the tube may be selectively rotated to an angular position about the longitudinal axis.

13. The torch of claim 12, wherein a contact tip is attached to the tube and is configured to preheat the welding wire before the welding wire is deposited to the weld, wherein preferably the tube comprises a conductive material and is connected to a power cable disposed in the conduit, and wherein the tube is configured to conduct current from the power cable to the contact tip to preheat the welding wire.

14. The torch of claim 12 or 13, wherein the actuating device is operable to initiate the supply of at least one of the shielding gas, the welding current, and a preheating current, wherein the preheating current preheats the welding wire before the weld wire is deposited into the weld.

15. The torch of claim 12 or 13 or 14, wherein the actuating device is selected from the group consisting of a: multi-level button, a multi-level trigger, a spring-loaded button, a spring-loaded trigger, a pressure sensitive button, a pressure sensitive trigger, a switch, a touch sensor, a slider, an encoder, or a tactile switch.
